# EUROPEAN PATENT APPLICATION

(11) **EP 4 539 210 A1**
(43) Date of publication of application: **16.04.2025**
(21) Application number: 23857676.3
(22) Date of filing: 21.08.2023
(51) Int. Cl.: H01M 10/6568, H01M 10/627, H01M 10/613, F16L 39/00, F16L 41/00

(54) **FLUID TRANSPORT PIPE**

(30) Priority: 25.08.2022 KR 20220106964
(71) Applicant: LG Energy Solution, Ltd., Seoul 07335 (KR)
(72) Inventor: JEON, Seung-Joon, Daejeon 34122 (KR); PARK, Dong-Ho, Daejeon 34122 (KR); LEE, Seung-Jun, Daejeon 34122 (KR); LEE, Jong-Soo, Daejeon 34122 (KR); HONG, Sang-Woo, Daejeon 34122 (KR)
(74) Representative: BCKIP Part mbB
(86) International application number: PCT/KR2023/012351
(87) International publication number: WO 2024/043644

(57) **Abstract**

Disclosed is a fluid transport pipe with excellent condensation suppression effect. The fluid transport pipe includes a first conduit having a shape elongated in one direction and configured to have a first flow path formed therein so that both longitudinal ends of the first flow path are open; a second conduit having a shape elongated in one direction and configured to have a second flow path formed therein so that both longitudinal ends of the second flow path are open; and a housing having a hollow and configured to accommodate the first conduit and the second conduit together.

## Description

### TECHNICAL FIELD

The present application claims priority to Korean Patent Application No. 10-2022-0106964 filed on August 25, 2022 in the Republic of Korea, the disclosures of which are incorporated herein by reference.

The present disclosure relates to a pipe for fluid transportation, and more specifically, to a pipe for a cooling water that may be applied to a water-cooled cooling system of an ESS, and a cooling device and an energy storage system including the same.

### BACKGROUND ART

Recently, as issues such as power shortage and eco-friendly energy have emerged, an energy storage system (ESS) for storing generated power has been receiving a lot of attention. Typically, if such an ESS is used, it is easy to build a power management system such as a Smart Grid System, which allows to easily control power supply and demand in a specific region or city. In addition, as the commercialization of electric vehicles begins in earnest, such an ESS may also be applied to electric charging stations that may charge electric vehicles.

Moreover, the ESS has been distributed for residential use and is increasingly being used widely in each household. For example, a residential ESS may store power generated through solar power provided outside the house or power supplied through commercial power sources or the like, and may supply power required in the house.

The ESS may have a form in which a plurality of battery modules may be accommodated in a rack frame. Also, each battery module may include a plurality of secondary batteries. In this way, the ESS includes a large number of secondary batteries, and each secondary battery may generate heat during the charging and discharging process. In addition, a plurality of battery modules may exist densely packed in a narrow space. In addition, the ESS may be placed in seasonally or geographically high-temperature environments, such as summer or deserts.

If this cooling is not performed properly, a thermal event may occur in a specific battery cell or battery module, which may cause failure or damage as well as serious accidents such as ignition or explosion. Also, if thermal runaway propagation occurs between the battery cells or the battery modules crowded in a small space, it may lead to a large-scale fire. Therefore, the ESS needs to be cooled appropriately depending on the situation.

Representative cooling methods for the ESS include air cooling and water cooling. However, in the case of the air cooling method, there is a problem that cooling efficiency is limited and it is vulnerable to ignition. Meanwhile, the water cooling method using a cooling water has the advantage of relatively excellent cooling performance and the ability to actively respond to fires or the like, so it is currently being used more widely in the ESS field. However, the water cooling method may cause problems such as short circuit or ignition in the ESS due to condensation.

In the past, to solve problems caused by condensation, a foam insulation material is sometimes used to surround the outside of the pipe. In particular, for cooling the ESS, an inlet pipe and an outlet pipe may be prepared separately. The inlet pipe is a transfer pipe for supplying a cold cooling water to take heat away from the battery module included in the ESS, and the outlet pipe is a transfer pipe for discharging a cooling water that is heated by absorbing heat from each battery module. At this time, in order to prevent condensation from occurring, a foam insulation material is often attached to each of the inlet pipe and the outlet pipe to completely surround the outer surface thereof.

However, in this method, the process of wrapping the pipe with the foam insulation material is very cumbersome, and there is a problem in that the condensation prevention effect is not sufficiently secured. In addition, in the above method, condensation may still occur due to various factors, such as the foam insulation material not properly surrounding the joints or branches between pipes or the surrounding thickness of the foam insulation material being inconsistent.

### DISCLOSURE

### Technical Problem

The present disclosure is designed to solve the problems of the related art, and therefore the present disclosure is directed to providing a fluid transport pipe with excellent condensation suppression effect, and a cooling device and an energy storage system including the same.

However, the technical problem to be solved by the present disclosure is not limited to the above, and other problems not mentioned herein will be clearly understood by those skilled in the art from the following disclosure.

### Technical Solution

In one aspect of the present disclosure, there is provided a fluid transport pipe, comprising: a first conduit having a shape elongated in one direction and configured to have a first flow path formed therein so that both longitudinal ends of the first flow path are open; a second conduit having a shape elongated in one direction and configured to have a second flow path formed therein so that both longitudinal ends of the second flow path are open; and a housing having a hollow and configured to accommodate the first conduit and the second conduit together.

Here, at least one of the first conduit and the second conduit may be configured to be at least partially spaced apart from an inner surface of the housing.

In addition, the first conduit and the second conduit may be disposed to be spaced apart from each other by a predetermined distance inside the hollow of the housing.

In addition, the first conduit and the second conduit may be mounted parallel to each other inside the hollow of the housing.

In addition, the first conduit and the second conduit may be formed in a circular tube shape, respectively.

In addition, the first conduit and the second conduit may have an air layer formed along a curved shape of at least a part of an outer surface thereof.

In addition, at least one of the first conduit and the second conduit may be coupled and fixed inside the hollow of the housing through two or more connection portions.

In addition, the connection portions may be located at both ends of the first conduit or the second conduit in a direction orthogonal to the arrangement direction of the first conduit and the second conduit.

In addition, the first conduit and the second conduit may be configured so that both open ends thereof are engaged with each other.

In addition, the housing may be configured so that one end and the other end thereof may be coupled to each other.

In addition, the housing may include a cover portion provided on at least at one end thereof and configured to extend further in a coupling direction than the first conduit and the second conduit.

In addition, the fluid transport pipe may further comprise an outer sealing portion provided on an outer surface of an end of the housing.

In another aspect of the present disclosure, there is also provided a cooling device, comprising the fluid transport pipe according to the present disclosure.

In still another aspect of the present disclosure, there is also provided an energy storage system, comprising the fluid transport pipe according to the present disclosure.

### Advantageous Effects

According to one aspect of the present disclosure, a water cooling system may be provided in which condensation can be effectively prevented.

Therefore, according to this aspect of the present disclosure, it is possible to prevent problems such as short circuit or ignition from occurring due to condensation in the ESS or the like to which a cooling system is applied.

In addition, according to one aspect of the present disclosure, since the ESS may be cooled using a cooling water, excellent cooling performance may be secured, and it is possible to actively respond when a fire occurs.

In addition, according to one aspect of the present disclosure, even if no insulation material is attached to the outside of the pipe, it is possible to prevent condensation from occurring or to reduce the possibility of condensation occurrence or the amount of condensation.

In particular, in the case of technology in which a foam insulation material is attached to the outside of the pipe using a double-sided tape or the like, there is a high possibility of blind spots due to condensation, there is a possibility of tearing of the insulation material due to external impact or the like, and there is a high possibility that the insulation material falls off from the pipe due to the deteriorated performance of the adhesive when the insulation material is attached for a long period of time. However, according to one aspect of the present disclosure, the possibility of blind spots due to condensation is low, robustness is secured against to external shocks, and the condensation prevention effect may be maintained stably even over a long period of time.

In addition, according to one aspect of the present disclosure, when attaching an insulation material or the like to the outside of the pipe to further increase condensation prevention performance, the insulation material or the like may be attached more easily. Also, according to this aspect of the present disclosure, the thickness of the insulation material may be minimized.

In addition, according to one aspect of the present disclosure, a cooling system with excellent workability may be provided.

In addition, according to one aspect of the present disclosure, the occurrence of water leaks may be effectively prevented.

In addition to the above, various other additional effects can be achieved by various embodiments of the present disclosure. The various effects of the present disclosure are explained in detail in each embodiment, or effects that can be easily understood by those skilled in the art will not be described in detail.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view schematically showing the configuration of a fluid transport pipe according to an embodiment of the present disclosure.
FIG. 2 is a diagram schematically showing the form of the fluid transport pipe according to an embodiment of the present disclosure viewed from one side.
FIG. 3 is a diagram schematically showing an example of a partial cross-sectional configuration of the fluid transport pipe according to an embodiment of the present disclosure.
FIG. 4 is a cross-sectional view schematically showing a partial configuration of the fluid transport pipe according to an embodiment of the present disclosure.
FIG. 5 is a cross-sectional view schematically showing a partial configuration of a fluid transport pipe according to another embodiment of the present disclosure.
FIG. 6 is an exploded perspective view schematically showing the configuration in which two fluid transport pipes according to an embodiment of the present disclosure are coupled.
FIG. 7 is a combined perspective view of FIG. 6.
FIG. 8 is a diagram showing the cross-sectional configuration of portion A3 in FIG. 7.
FIG. 9 is an enlarged view showing portion A4 of FIG. 8.
FIG. 10 is an enlarged view showing portion A5 of FIG. 8.
FIG. 11 is a cross-sectional view schematically showing a partial configuration of a fluid transport pipe according to still another embodiment of the present disclosure.
FIG. 12 is a perspective view schematically showing the configuration of a fluid transport pipe according to still another embodiment of the present disclosure.
FIG. 13 is a diagram schematically showing the configuration in which the fluid transport pipe of FIG. 12 is coupled.
FIG. 14 is a diagram schematically showing a partial configuration of a cooling device according to an embodiment of the present disclosure.
FIG. 15 is a diagram schematically showing the configuration of an energy storage system according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

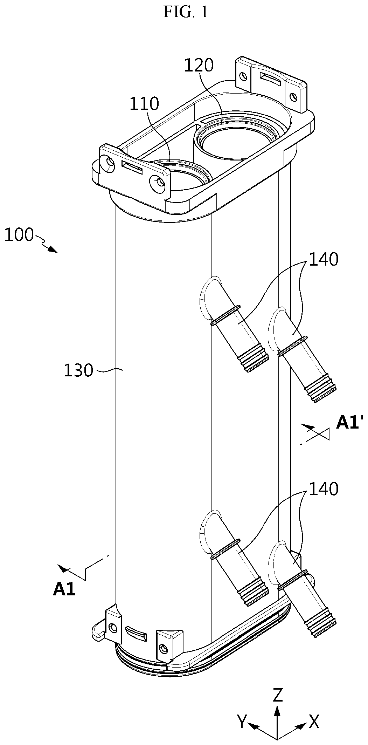

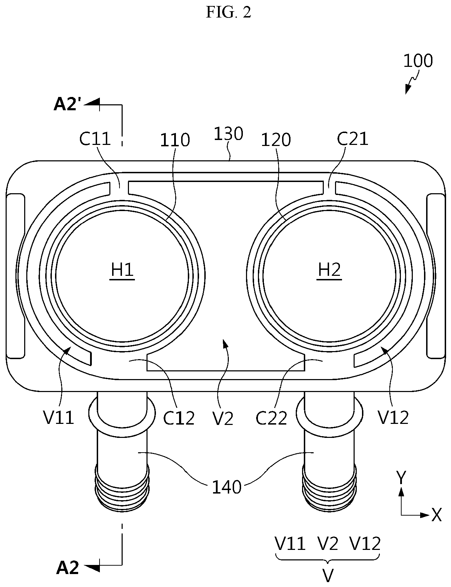

FIG. 1 is a perspective view schematically showing the configuration of a fluid transport pipe 100 according to an embodiment of the present disclosure. Also, FIG. 2 is a diagram schematically showing the form of the fluid transport pipe 100 according to an embodiment of the present disclosure viewed from one side. For example, FIG. 2 may be regarded as a diagram showing the fluid transport pipe 100 according to the present disclosure in an erect state, viewed from the top.

Referring to FIGS. 1 and 2, the fluid transport pipe 100 according to the present disclosure includes a first conduit 110, a second conduit 120, and a housing 130.

The first conduit 110 may have a shape elongated in one direction. For example, the first conduit 110 may be configured to elongate in a Z-axis direction in FIG. 1. Also, the first conduit 110 may have a flow path (first flow path) formed therein, as indicated by H1 in FIG. 2. Also, through the first flow path H1, a fluid, especially a cooling water, may flow.

Here, the first flow path H1 may be configured so that both longitudinal ends are open. For example, in the configuration of FIG. 1, the first flow path H1 may be configured to be open at both ends in the Z-axis direction. In this case, a cooling water may flow in at one end of the first flow path H1 and flow out at the other end. In this embodiment, the cooling water may flow along the extension direction of the first conduit 110. For example, the cooling water may flow in the lower direction (-Z-axis direction) from the upper portion of the first conduit 110.

The second conduit 120 may be configured to elongate in one direction, like the first conduit 110. For example, the second conduit 120 may have a shape elongated in the Z-axis direction, as shown in the embodiment of FIG. 1. Also, the second conduit 120 may have a flow path (second flow path) formed therein, as indicated by H2 in FIG. 2. The second flow path H2 is a flow path separate from the first flow path H1 of the first conduit 110, and may be configured to be completely separated from the first flow path H1 from one end to the other without communicating with the first flow path H1.

In addition, the second flow path H2 may be configured so that both longitudinal ends are open, like the first flow path H1. For example, in the embodiment of FIG. 1, the second flow path H2 may be configured to be open at both ends in the Z-axis direction. In this case, a cooling water may flow in at one end of the second flow path H2 and flow out at the other end. Also, the cooling water may flow along the extension direction of the second conduit 120. For example, the cooling water may flow in the upper direction (+Z-axis direction) from the lower portion of the second conduit 120.

The housing 130 may have a hollow formed therein. For example, the housing 130 may have an empty space formed therein, as portion indicated by V in FIG. 2. Also, in the empty space, namely the hollow V, the first conduit 110 and the second conduit 120 may be accommodated together. Moreover, the housing 130 may have a single hollow, and the first conduit 110 and the second conduit 120 may be accommodated in the single hollow. In other words, it may be regarded that the housing 130 is configured to accommodate both the first conduit 110 and the second conduit 120 in one common space.

The housing 130 may be formed to elongate in one direction. In particular, the housing 130 may be configured to extend in the longitudinal direction of the first conduit 110 and the second conduit 120 so that both the first conduit 110 and the second conduit 120 are accommodated therein. For example, referring to FIG. 1, like the first conduit 110 and the second conduit 120, the housing 130 may be configured to elongate in the Z-axis direction. At this time, the inner space of the housing 130 may be regarded as elongating along the extension direction of the housing 130, for example the Z-axis direction. Therefore, the housing 130 may be regarded as having a hollow elongated in one direction.

The first conduit 110 and the second conduit 120 may be configured to allow fluid, especially liquid, to flow in the flow path therein. For example, the first conduit 110 and the second conduit 120 may be configured to allow a cooling water to flow through each flow path. Therefore, the first conduit 110 and the second conduit 120 may be configured to allow fluid to flow from one end to the other end, respectively. For example, in the embodiment of FIG. 1, the cooling water may flow in the Z-axis direction through the first conduit 110 and the second conduit 120.

In the case of the fluid transport pipe 100 according to this embodiment of the present disclosure, since two conduits, namely the first conduit 110 and the second conduit 120, are included inside one housing 130, it is possible to implement a system in which both the supply and discharge of fluid are accomplished. For example, if the fluid transport pipe 100 according to the present disclosure is installed to flow a cooling water for cooling a battery of a specific device, such as an energy storage system (ESS), the cooling water supplied to the battery may flow through the first conduit 110, the cooling water discharged from the battery may flow through the second conduit 120. At this time, it may be regarded that a relatively low temperature cooling water flows through the first conduit 110, and a relatively high temperature cooling water flows through the second conduit 120. In this configuration, the fluid transport pipe 100 according to the present disclosure may perform both the role of supplying a cooling water to the battery of the ESS and the role of discharging a cooling water. Therefore, a water cooling system for a device such as an ESS may be more easily implemented through simple tasks or processes.

Here, the cooling water may flow in opposite directions through the first conduit 110 and the second conduit 120. For example, in the embodiment of FIG. 1, the cooling water may flow in the +Z-axis direction, namely from bottom to top, in the first conduit 110, and the cooling water may flow in the -Z-axis direction, namely from bottom to top, in the second conduit 120.

In addition, according to this embodiment of the present disclosure, condensation may be effectively prevented from occurring during the fluid transport process. In particular, the fluid transport pipe 100 according to the present disclosure may be regarded as having a double pipe structure. In other words, when a cooling water flows inside the fluid transport pipe 100, it may be regarded that the space between the cooling water and the outside air is doubly blocked by the conduit and the housing 130. Therefore, even if the cooling water has a temperature difference from the outside air, condensation may be effectively prevented from occurring on the surface of the fluid transport pipe 100. Accordingly, problems such as short circuit or ignition due to condensation may be prevented from occurring inside a device such as an ESS.

In addition, at least one of the first conduit 110 and the second conduit 120 may be configured to be at least partially spaced apart from the inner surface of the housing 130. In particular, both the first conduit 110 and the second conduit 120 may be installed to be partially spaced apart from the inner surface of the housing 130 in the inner space of the housing 130, namely the hollow V.

For example, seeing the embodiment shown in FIG. 2, the first conduit 110 and the second conduit 120 may be disposed at the left side and the right side, respectively, inside the hollow V of the housing 130. At this time, the left outer surface of the first conduit 110 may be configured to be spaced by a predetermined distance from the left inner surface of the hollow of the housing 130, as indicated by V11. In addition, the right outer surface of the second conduit 120 may be configured to be spaced by a predetermined distance from the right inner surface of the hollow of the housing 130, as indicated by V12. At this time, it may be regarded that a gas layer, especially an air layer, is formed in V11 between the outer surface of the first conduit 110 and the inner surface of the housing 130 and in V12 between the outer surface of the second conduit 120 and the inner surface of the housing 130. That is, the first conduit 110 and the second conduit 120 may be configured so that their surfaces located at sides opposite to the sides facing each other are spaced apart from the inner surface of the housing 130.

According to this embodiment of the present disclosure, the effect of preventing condensation may be further improved. In other words, since the air layer formed between the conduit 110, 120 and the housing 130 functions as an insulating layer, it is possible to more effectively prevent condensation from occurring on the outer surface of the conduit due to the temperature difference between the fluid flowing inside the conduit, for example the cooling water, and the outside air.

In addition, the first conduit 110 and the second conduit 120 may be disposed to be spaced apart from each other by a predetermined distance within the hollow V of the housing 130. In particular, an air layer may be formed between the first conduit 110 and the second conduit 120.

For example, seeing the embodiment of FIG. 2, the first conduit 110 and the second conduit 120 are arranged in the left and right directions, but an empty space may be formed between them, as indicated by V2. Moreover, a gas layer, especially an air layer, may be formed in the empty space between the first conduit 110 and the second conduit 120.

The separation space, or air layer, between the first conduit 110 and the second conduit 120 may function as an insulating layer. Therefore, direct transfer of heat between the first conduit 110 and the second conduit 120 may be prevented or minimized. In particular, cooling water at different temperatures may flow through the first conduit 110 and the second conduit 120. For example, the cooling water before absorbing heat from the battery of the ESS may flow through the first conduit 110, and the cooling water after absorbing heat from the battery of the ESS may flow through the second conduit 120. In this case, it may be regarded that the cooling water temperature of the second conduit 120 is higher than the cooling water temperature of the first conduit 110. At this time, the air layer V2 between the first conduit 110 and the second conduit 120 may prevent heat from being transferred from the second conduit 120 to the first conduit 110. Therefore, the temperature of the cooling water supplied through the first conduit 110 may be well maintained, ensuring stable cooling performance.

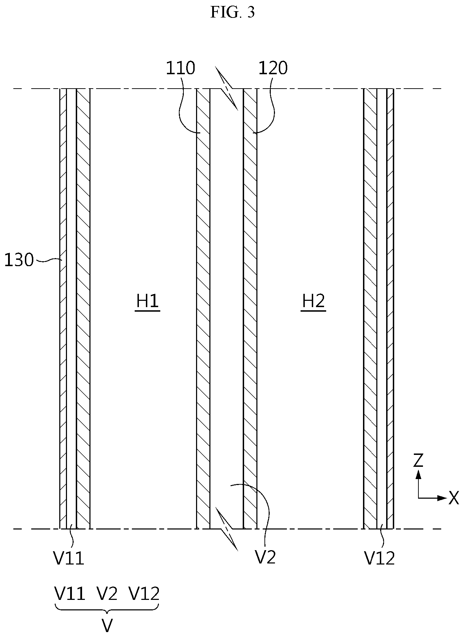

In addition, the first conduit 110 and the second conduit 120 may be mounted parallel to each other inside the hollow V of the housing 130. This will be described in more detail with reference to FIG. 3.

FIG. 3 is a diagram schematically showing an example of a partial cross-sectional configuration of the fluid transport pipe 100 according to an embodiment of the present disclosure. For example, FIG. 3 may be regarded as a cross-sectional view, taken along line A1-A1' of FIG. 1.

Referring to FIG. 3 further, the first conduit 110 and the second conduit 120 may be configured in an elongated form in the upper and lower directions (Z-axis direction), respectively. In particular, the extension directions of the first conduit 110 and the second conduit 120 are parallel to each other, and the separation distance may be maintained constant from the top to the bottom. That is, as indicated by V2 in FIG. 3, the separation space between the first conduit 110 and the second conduit 120 may be kept constant from the top to the bottom.

According to this embodiment of the present disclosure, the insulation performance between the first conduit 110 and the second conduit 120 may be maintained stably throughout the inner space of the housing 130.

In addition, in the embodiment of FIG. 3, the separation distance between each conduit 110, 120 and the inner surface of the housing 130 may be kept constant from one end to the other end. For example, in the space between the first conduit 110 and the inner surface of the housing 130, as indicated by V11, and the space between the second conduit 120 and the inner surface of the housing 130, as indicated by V12, the separation distance in the left and right direction may be kept constant from top to bottom.

According to this embodiment of the present disclosure, the effect of preventing condensation from occurring may be stably secured on the whole from one end to the other end of the housing 130 in the fluid transport direction.

In addition, in the fluid transport pipe 100 according to the present disclosure, the plurality of conduits may be formed in a circular pipe shape, respectively. For example, referring to FIG. 2, both the first conduit 110 and the second conduit 120 may have horizontal cross-sections formed in a ring shape. That is, the first conduit 110 and the second conduit 120 may be formed in a cylindrical shape with a flow path formed therein. At this time, the flow path of each conduit may also be regarded as being formed in a cylindrical shape.

According to this embodiment, the first conduit 110 and the second conduit 120 may be spaced as much as possible. For example, seeing the embodiment of FIG. 2, the separation space between the first conduit 110 and the second conduit 120 may be secured as wide as possible, as indicated by V2. Therefore, the heat transfer between the fluids flowing inside the first conduit 110 and the second conduit 120 may be minimized. Also, according to this embodiment, fluid may be allowed to flow smoothly inside the first conduit 110 and the second conduit 120.

In this embodiment, an air layer may be formed between each conduit 110, 120 formed in a circular tube shape and the inner surface of the housing 130, along the outer shape of each conduit. That is, the air layer may be formed to surround at least a part of the outer surface of each conduit. For example, seeing the configuration of FIG. 2, a curved surface may be formed on the left outer surface of the first conduit 110. According to the curved shape of the left side of the first conduit 110, the air layer may be formed to extend with a uniform thickness from the upper portion of the first conduit 110 to the left portion and the lower portion thereof (V11). In addition, in the embodiment of FIG. 2, a curved surface may be formed on the right outer surface of the second conduit 120, and the air layer may extend with a uniform thickness along the shape of the curved surface of the right side the second conduit 120 from the upper portion of the second conduit 120 via the right side to the lower portion (V12). In this case, the air layer formed on the outer surface of each conduit may be regarded as being formed in a curved plate shape along the curved shape of the outer side of each conduit.

In particular, in the first conduit 110 and the second conduit 120, an air layer in a curved surface shape may be formed on the curved portion facing the inner surface of the housing 130. For example, in the first conduit 110, an air layer in a curved plate shape may be formed on the left outer surface. Also, in the second conduit 120, an air layer in t a curved plate shape may be formed on the right outer surface.

According to this embodiment of the present disclosure, the condensation prevention effect according to the insulation performance of the air layer may be provided uniformly on the whole. For example, in the first conduit 110, insulation performance by the air layer may be secured uniformly from the upper portion of the left outer surface via the left side to the lower portion. Therefore, the possibility of blind spots occurrence due to condensation may be reduced. Also, according to this embodiment, it is possible to reduce the overall volume of the pipe while forming an abundant insulating layer.

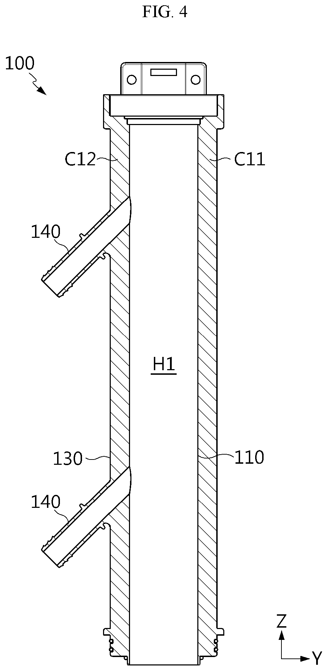

At least one of the first conduit 110 and the second conduit 120 may be coupled and fixed to the inside of the hollow of the housing 130 through two or more connection portions. This will be described in more detail with additional reference to FIG. 4 along with FIG. 2.

FIG. 4 is a cross-sectional view schematically showing a partial configuration of the fluid transport pipe 100 according to an embodiment of the present disclosure. For example, FIG. 4 may be regarded as showing one form of a cross-sectional configuration, taken along line A2-A2' of FIG. 2.

Referring to FIGS. 2 and 4, the first conduit 110 may include two connection portions, namely a first front connection portion C11 and a first rear connection portion C12. Also, the first conduit 110 may be coupled and fixed to the inner surface of the housing 130 through the two connection portions C11, C12. In addition, referring to FIG. 2, the second conduit 120 may include two connection portions, namely, a second front connection portion C21 and a second rear connection portion C22. Also, the second conduit 120 may be coupled and fixed to the inner surface of the housing 130 through the two connection portions C21, C22.

According to this embodiment of the present disclosure, the first conduit 110 and the second conduit 120 may stably maintain their positions inside the hollow of the housing 130. In particular, force may be applied to each conduit while a cooling water is flowing through each conduit. At this time, each connection portion may prevent the first conduit 110 and/or the second conduit 120 from moving within the hollow of the housing 130 by this force.

In addition, according to this embodiment, the separation space, for example an air layer, formed between each conduit and the inner surface of the housing 130 may be stably maintained through the connection portions provided on the inner side and the outer side of each conduit, respectively. Therefore, in this case, the dual structure of the fluid transport pipe 100 according to the present disclosure, especially the insulation performance by the air layer, may be stably secured. Therefore, the condensation prevention performance may be achieved more reliably.

Moreover, the connection portion may be located at both ends of the first conduit 110 or the second conduit 120 in a direction orthogonal to the arrangement direction of the first conduit 110 or the second conduit 120.

For example, referring to FIG. 2, the first conduit 110 and the second conduit 120 are arranged in the left and right direction (X-axis direction), and the connection portion may be provided in the front and rear direction (Y-axis direction) of the conduit orthogonal to the left and right direction on the horizontal plane. More specifically, the first connection portions C11, C12 are provided at the front side and the rear side of the first conduit 110, respectively, and may be coupled and fixed to the inner surface of the housing 130. Also, the second connection portions C21, C22 are provided at the front side and the rear side of the second conduit 120, respectively, and may be coupled and fixed to the inner surface of the housing 130.

According to this embodiment of the present disclosure, since the connection portion is not provided between the conduits, heat transfer between the conduits through the connection portion may be prevented.

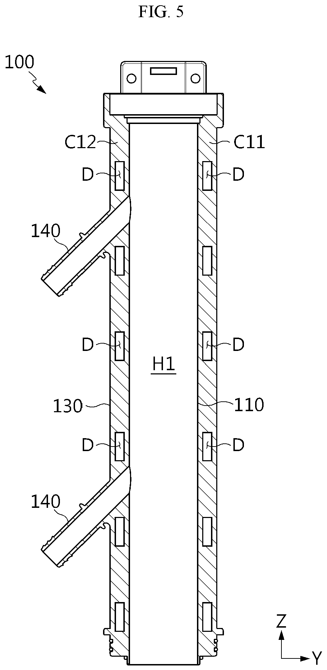

FIG. 5 is a cross-sectional view schematically showing a partial configuration of a fluid transport pipe 100 according to another embodiment of the present disclosure. For example, FIG. 5 may be regarded as showing another form of a cross-sectional configuration, taken along line A2-A2' of FIG. 2. For various embodiments included in this specification, including this embodiment, features similar or identical to other embodiments will not be described in detail, and features different from other embodiments will be described in detail.

As shown in FIG. 5, a through hole may be formed in the connection portion that fixes each conduit inside the hollow of the housing 130. More specifically, seeing the embodiment of FIG. 5, one or more through holes, as indicated by D, may be formed in the first front connection portion C11 and the first rear connection portion C12 provided at the front side and the rear side of the first conduit 110. Also, in the embodiment of FIG. 2, one or more through holes may be formed in the second front connection portion C21 and/or the second rear connection portion C22 provided in the second conduit 120.

In this embodiment of the present disclosure, the through hole D may communicate two air layers distinct from each other. For example, in FIG. 2, two air layers V11, V2 separated through the first connection portions C11, C12 may be communicated with each other through the through hole D formed in the first connection portions C11, C12. Also, in FIG. 2, the two air layers C12, V2 separated by the second connection portions C21, C22 may be communicated with each other through the through hole formed in the second connection portions C21, C22.

According to this embodiment, due to the flow of air between several air layers, the insulation performance of the air layer may be further improved. Also, according to this embodiment, since an air layer is also formed in the central portion of the connection portion, heat transfer through the connection portion between the conduit 110, 120 and the housing 130 may be prevented or reduced. Therefore, in this case, it is possible to more reliably prevent condensation from occurring on the outer surface of the housing 130.

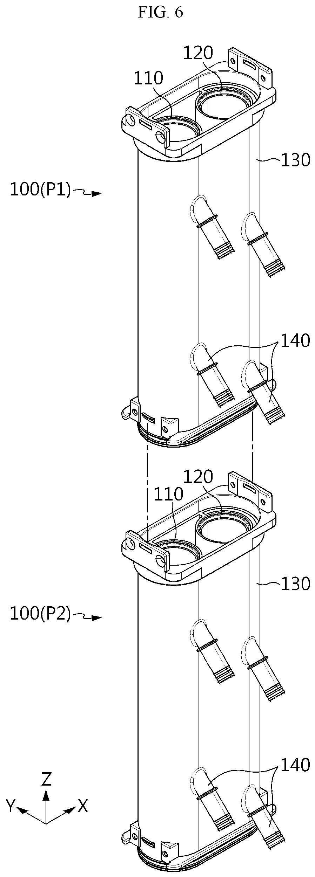

Two or more fluid transport pipes 100 according to the present disclosure may be coupled. In particular, the fluid transport pipes 100 according to the present disclosure may be configured to be coupled in a longitudinal direction so that fluid flows between the conduits included in each pipe. This will be described in more detail with reference to FIGS. 6 to 8.

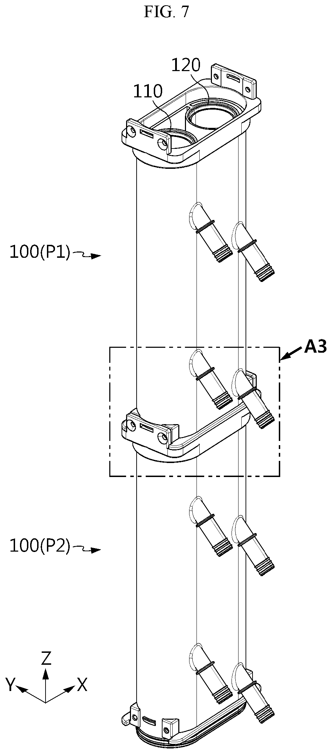

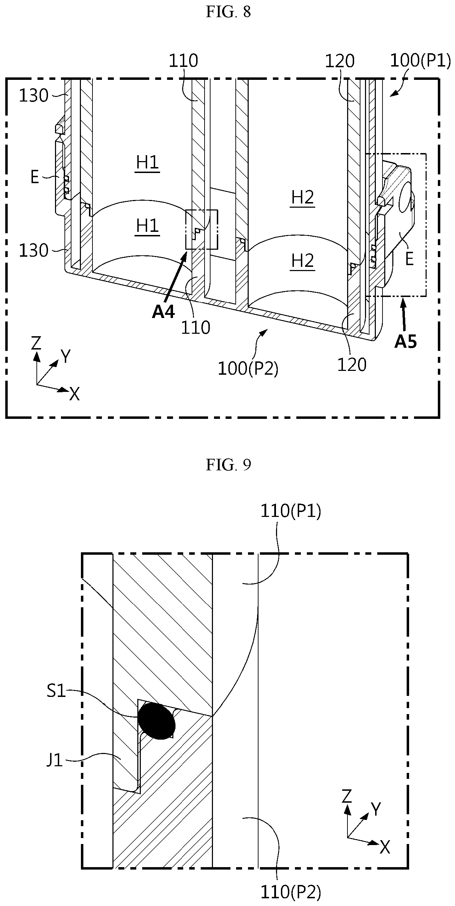

FIG. 6 is an exploded perspective view schematically showing the configuration in which two fluid transport pipes 100 according to an embodiment of the present disclosure are coupled, and FIG. 7 is a combined perspective view of FIG. 6. Also, FIG. 8 is a diagram showing the cross-sectional configuration of portion A3 in FIG. 7.

Referring to FIGS. 6 to 8, a plurality of fluid transport pipes 100, as indicated by P1 and P2, may be coupled in a longitudinal direction. More specifically, in FIGS. 6 to 8, the first pipe P1 and the second pipe P2 may be elongated in the upper and lower directions, respectively, and located at the upper portion and the lower portion, and may be coupled with each other in the upper and lower direction (Z-axis direction). Also, the first pipe P1 and the second pipe P2 may be configured in the same form.

Here, the conduits 110, 120 included in the fluid transport pipe 100 may be configured so that both open ends are aligned with each other. First, in each fluid transport pipe 100, the upper end and the lower end of the first conduit 110 are open to each other, and the open ends may be configured to be engaged with each other. That is, seeing the first pipe P1 as a reference, the upper end of the first conduit 110 in the first pipe P1 may be configured to communicate with and be fastened to the lower end of the first conduit 110.

Therefore, when two different fluid transport pipes 100, namely the first pipe P1 and the second pipe P2, are coupled in the upper and lower directions, the lower end of the first conduit 110 included in the first pipe P1 located at the upper portion may be engaged with the upper end of the first conduit 110 included in the second pipe P2 located at the lower portion. At this time, the fastening portions of the first conduits 110 of the two interconnected pipes may be configured to be sealed to each other to prevent the fluid of the first flow path H1 from leaking. Therefore, the cooling water or the like may flow continuously between the first conduits 110 included in two fluid transport pipes 100, for example the first pipe P1 and the second pipe P2.

In addition, in each fluid transport pipe 100, the second conduit 120 may also have an upper end and a lower end that are open to each other, and the open ends may be configured to be engaged with each other. That is, seeing the first pipe P1 as a reference, the upper end of the second conduit 120 in the first pipe P1 may be configured to communicate with and be fastened to the lower end of the second conduit 120.

Therefore, when two different fluid transport pipes 100, namely the first pipe P1 and the second pipe P2, are coupled in the upper and lower directions, the lower end of the second conduit 120 of the first pipe P1 located at the upper portion may be coupled with the upper end of the second conduit 120 of the second pipe P2 located at the lower portion. At this time, the coupling portions between the second conduits 120 may be configured to be sealed to each other to prevent the fluid of the second flow path H2 from leaking. Therefore, fluid such as a cooling water may flow continuously between the second conduits 120 included in two fluid transport pipes 100.

Although FIGS. 6 to 8 show that only two fluid transport pipes 100 are connected for convenience of explanation, three or more fluid transport pipes 100 may be connected long. In particular, in the case of large devices such as ESS, in order to provide a cooling system to supply a cooling water to a plurality of batteries, a very large number of fluid transport pipes 100 are connected to each other, and at this time, the first conduits 110 and the second conduits 120 of these fluid transport pipes 100 may be connected long to each other.

According to this embodiment of the present disclosure, a medium or large cooling system may be easily implemented by connecting two different fluid transport pipes 100. In particular, according to this embodiment, the length of the fluid transport path may be freely adjusted by selectively changing the number of fluid transport pipes 100 connected to each other. Therefore, the fluid transport pipe 100 may be provided to be compatible with various types of cooling systems.

The fluid transport pipe 100 according to the present disclosure may further include an inner sealing portion. This will be described in more detail with additional reference to FIG. 9.

FIG. 9 is an enlarged view showing portion A4 of FIG. 8.

Referring to FIGS. 8 and 9, the inner sealing portion indicated by S1 may be located at the end of the first conduit 110. For example, the inner sealing portion S1 may be located at the upper end of the first conduit 110. In this case, when two different fluid transport pipes 100, for example the first pipe P1 and the second pipe P2, are coupled with each other, the inner sealing portion S1 may be interposed between the two first conduits 110. Also, as shown in FIG. 8, the inner sealing portion S1 may be located at the end of the second conduit 120. For example, the inner sealing portion S1 may be located at the upper end of the second conduit 120. Therefore, when two different fluid transport pipes 100 are coupled to each other, the inner sealing portion S1 may be interposed between the two second conduits 120.

In particular, the inner sealing portion S1 may be formed in a ring shape and disposed throughout the upper end of the first conduit 110 and/or the second conduit 120. Moreover, when the first conduit 110 and the second conduit 120 are formed in a circular tube shape, the inner sealing portion S1 may be configured in an O-ring form. The inner sealing portion S1 may be made of an elastic material such as rubber, silicone, or urethane. Alternatively, the inner sealing portion S1 may include an adhesive material.

According to this embodiment of the present disclosure, in a state where the plurality of fluid transport pipes 100 are connected, the sealing performance between the first conduits 110 and/or the second conduits 120 may be further improved. Therefore, even when fluid such as a cooling water flows through the flow path included in the plurality of fluid transport pipes 100, leakage prevention performance may be secured more stably.

In the fluid transport pipe 100 according to the present disclosure, each conduit may be configured so that the upper end and the lower end can be fitted and coupled to each other.

For example, as shown in FIG. 9, between different fluid transport pipes 100 stacked in the upper and lower directions, when the lower end of the first conduit 110 located at the upper portion and the upper end of the first conduit 110 located at the lower portion are coupled with each other, the lower end of the first conduit 110 located at the upper portion may be configured to be fitted and coupled to the upper end of the first conduit 110 located at the lower portion. At this time, the end of the first conduit 110, such as the lower end, may be configured to protrude in the coupling direction, namely the lower direction, as indicated by J1 in FIG. 9. In addition, a concave portion may be formed at the upper end of the first conduit 110 in a position and shape corresponding to the bottom protrusion J1 of the first conduit 110. Therefore, when the first pipe P1 and the second pipe P2 are coupled in the upper and lower directions, the bottom protrusion J1 of the first conduit 110 of the first pipe P1 may be inserted and fastened into the top concave portion of the first conduit 110 of the second pipe P2.

Meanwhile, although the configuration of the first conduit 110 is shown in FIG. 9, the second conduit 120 may also have this insertion fastening configuration. In other words, the upper end and the lower end of the second conduit 120 may also be configured to be fitted and coupled to each other.

According to this embodiment of the present disclosure, in a state where two fluid transport pipes 100 are connected to each other, the bonding force and the sealing force between the conduits may be further improved. For example, when a cooling water flows through the conduits, the leakage prevention performance of the cooling water may be more reliably achieved due to the insertion and fastening configuration of the conduits.

Moreover, according to this embodiment, at the connection portion of the conduits, the path for the fluid to escape to the outside may be complicated. For example, in the first flow path, the leakage path for the cooling water to leak out through the connection portion of the conduits may be formed long in a bent shape. Accordingly, the water leak prevention performance of the connection portion of the conduits may be further improved.

In addition, in this embodiment, the inner sealing portion S1 may be located at the insertion fastening portion of each conduit 110, 120. For example, as shown in FIG. 9, the inner sealing portion S1 may be interposed in the fastening portion between the bottom protrusion J1 of the first conduit 110 of the first pipe P1 and the top concave portion of the first conduit 110 of the second pipe P2.

In addition, the housing 130 may be configured so that one end and the other end may be coupled to each other.

For example, referring to FIGS. 6 to 8, two different fluid transport pipes 100 may be connected to each other in the longitudinal direction. At this time, the housings 130 included in the two fluid transport pipes 100 may be configured so that both longitudinal ends thereof are connectable to each other. More specifically, in the embodiments of FIGS. 6 to 8, when the first pipe P1 and the second pipe P2 are stacked in the upper and lower directions and connected to each other, the lower end of the housing 130 of the first pipe P1 located at the upper floor and the upper end of the housing 130 of the second pipe P2 at the lower floor may be configured to be coupled with each other. Here, since the first pipe P1 and the second pipe P2 may be formed in the same shape, it may be regarded that the upper end and the lower end of the pipes are configured to be coupled with each other.

According to this embodiment, due to the coupling configuration of the housing 130, the connection state between the conduits may be stably maintained. Therefore, it is possible to ensure stable transport of the fluid flowing along the flow path in each conduit. Moreover, in this case, it is possible to more reliably prevent water leakage from occurring through the fastening portion of the conduits.

When two different housings 130 are coupled, they may be connected in various ways. For example, the housing 130 may be configured to be inserted and fastened to another housing 130. At this time, one end (for example, the upper end) of the housing 130 may be configured to protrude in the coupling direction (for example, the upper direction) and be fitted into the other end (for example, the lower end) of the housing 130. Also, the housing 130 may be configured to be hooked to another housing 130. For example, the housing 130 may have a hook projection at the upper end, and may also have a hook groove at a lower end in a position and shape corresponding to the hook projection.

The housing 130 may be configured to seal the hollow V therein when two different fluid transport pipes 100 are connected to each other. For example, the housing 130 may be formed in a tube shape in which the hollow V is formed, so that both ends of the hollow V are open. At this time, the open portions at both ends of the housing 130 may be formed in a ring shape. For example, the horizontal cross-sectional shape of the open portions at both ends of the housing 130 may have a substantially oval ring shape. In addition, the housing 130 may be coupled with the housing 130 of another fluid transport pipe 100 such that the ring-shaped open portions come into contact with each other to seal the hollow V therein. In this case, it may be regarded that the inner space of the housing 130 is configured not to communicate with the external space. As a specific example, when the first pipe P1 and the second pipe P2 are coupled as in the embodiment of FIGS. 6 to 8, the hollow of the first pipe P1 and the hollow of the second pipe P2 may communicate with each other to form a common hollow. However, the common hollow may be configured to be sealed without communicating with the external space of each pipe P1, P2.

According to this embodiment of the present disclosure, the condensation prevention performance may be achieved more effectively. That is, according to this embodiment, in a state where the plurality of fluid transport pipes 100 are connected to each other, since the hollow V of the housing 130 is sealed, the external air may not easily flow into the interior of the housing 130. Therefore, even in a situation where the external humidity of the housing 130 increases, the humidity in the inner space of the housing 130 may be maintained low. Therefore, it is possible to prevent condensation from occurring on the outer side of the first conduit 110 or the second conduit 120 inside the hollow V of the housing 130.

In addition, according to this embodiment, the insulation performance of the air layer between each conduit 110, 120 and the housing 130 formed by the hollow of the housing 130 and the air layer between the conduits 110, 120 may be maintained more effectively. Therefore, the problem of condensation occurrence on the outer surface of the housing 130 may be more reliably prevented.

The housing 130 may have a cover portion, as indicated by E in FIG. 8. Here, the cover portion E may be provided on at least one end of the housing 130. For example, the cover portion E may be provided at the upper end of the housing 130.

In addition, the cover portion E may be configured to extend further in the coupling direction than the first conduit 110 and the second conduit 120. For example, referring to FIGS. 6 to 8, the cover portion E may protrude further in the upper direction than the first conduit 110 and the second conduit 120. As another example, the cover portion E is provided at the lower end of the housing 130 and may protrude further in the lower direction than the lower ends of the first conduit 110 and the second conduit 120.

In particular, the cover portion E may be configured to surround a portion of the housing 130 of another fluid transport pipe 100 in a state where two fluid transport pipes 100 are coupled to each other. For example, as shown in FIGS. 6 to 8, the cover portion E located at the upper end of the second pipe P2 may be configured to surround the outer side of the lower end of the housing 130 of the first pipe P1.

According to this embodiment of the present disclosure, the fitting configuration between two housings 130 may be easily implemented by the cover portion E. Therefore, the bonding force between the two fluid transport pipes 100 may be stably secured. Also, according to this embodiment, the coupling between the two housings 130 may be guided by the cover portion E. Therefore, the work of connecting the plurality of fluid transport pipes 100 may be performed more easily. Moreover, according to this embodiment, the sealing force of the hollow formed inside the housing 130 between the two fluid transport pipes 100 may be further improved by the cover portion E. Therefore, the condensation prevention performance may be further improved.

Meanwhile, in the former embodiment, it is described that both ends of the hollow of the housing 130 are open, but the hollow of the housing 130 may be configured in a closed form for each fluid transport pipe 100. For example, the fluid transport pipe 100 according to the present disclosure may be configured in a form in which only both ends of the first conduit 110 and the second conduit 120 are open, and both ends of the housing 130 are not open but closed. In this case, the insulation performance of the air layer by the hollow V may be secured more stably. In addition, even if condensation occurs inside the hollow of the housing 130, such condensation is prevented from being discharged to the outside of the fluid transport pipe 100, thereby preventing various problems such as short circuits or ignition. In addition, in this case, since a separated hollow V is formed for each fluid transport pipe 100, even if a crack or the like occurs in a specific fluid transport pipe 100 and the sealing state of the hollow V is released, the sealing state of the hollow V of another fluid transport pipe 100 may be maintained as is.

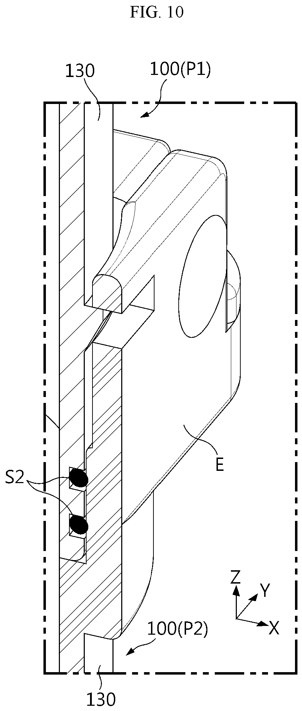

The fluid transport pipe 100 according to the present disclosure may further include an outer sealing portion. This will be described in more detail with additional reference to FIG. 10 along with FIG. 8.

FIG. 10 is an enlarged view showing portion A5 of FIG. 8.

Referring to FIGS. 8 and 10, the fluid transport pipe 100 according to the present disclosure may further include an outer sealing portion provided on the outer surface of the end of the housing 130. More specifically, in the embodiment of FIG. 10, the outer sealing portion as indicated by S2 may be provided at the lower end of the housing 130 of the first pipe P1. The outer sealing portion S2 may be formed in a ring shape to surround the outer side of the housing 130. Also, the outer sealing portion S2 may be made of an elastic material such as rubber, silicone, or urethane. In addition, the outer sealing portion S2 may have an adhesive material. Moreover, as shown in FIG. 10, two or more outer sealing portions S2 may be provided to be spaced apart from each other in the coupling direction of the fluid transport pipe 100, for example the upper and lower direction (Z-axis direction).

According to this aspect of the present disclosure, the sealing power of the hollow V at the coupling portion of the housing 130 may be further improved. Therefore, the insulation performance of the air layer formed by the hollow V may be secured more stably, and the condensation prevention effect or the like may be further improved.

Moreover, when the housing 130 includes the cover portion E, the outer sealing portion S2 may be provided in a portion coupled to the cover portion E. For example, the outer sealing portion S2 may be located in a portion of the first pipe P1 that is inserted into the cover portion E of the second pipe P2. At this time, the outer sealing portion S2 may contact the inner surface of the cover portion E of the second pipe P2.

In addition, the outer sealing portion S2 may be disposed to be inserted inward at the outer surface of the housing 130. In this case, a ring-shaped groove may be formed on the outer surface of the housing 130 so that the outer sealing portion S2 may be inserted. For example, as shown in FIGS. 8 and 10, a groove may be formed on the outer surface of the housing 130 to be concave in the inner horizontal direction toward the hollow. Also, this groove may be formed on at least a part of the outer surface of the housing 130. In particular, the groove may be formed to surround the outer surface of the housing 130 in one circle. Also, the outer sealing portion S2 in an O-ring form may be inserted into the groove.

According to this embodiment of the present disclosure, the position of the outer sealing portion S2 on the outer surface of the housing 130 may be maintained stably. In particular, when two fluid transport pipes 100 are connected, the outer sealing portion S2 may be prevented from moving. Therefore, the sealing performance by the outer sealing portion S2 may be further improved.

At least a part of the fluid transport pipe 100 according to the present disclosure may be manufactured by injection molding. For example, the first conduit 110, the second conduit 120, and the housing 130 may be manufactured in an integrated form using an injection molding method. In particular, the fluid transport pipe 100 according to the present disclosure may be manufactured relatively easily using an injection molding method in a double pipe form that can prevent condensation.

The fluid transport pipe 100 according to the present disclosure may further include a branch tube 140, as shown in various drawings of the former embodiments.

The branch tube 140 may be configured to communicate with the first conduit 110 or the second conduit 120. That is, the branch tube 140 has a branch flow path to allow fluid to flow therein, and this branch flow path may be connected to the first flow path of the first conduit 110 or the second flow path of the second conduit 120. Accordingly, a branch hole for connecting to the branch tube 140 may be formed in the housing 130, the first conduit 110, and/or the second conduit 120.

The branch tube 140 is located between a device that receives fluid and each conduit 110, 120, and may be configured to allow fluid to flow. For example, when the fluid transport pipe 100 according to the present disclosure is applied to the ESS, a cooling water flowing through the first conduit 110 may be supplied around or inside each battery module via the branch tube 140. Also, the cooling water absorbing heat from the battery module may flow into the second conduit 120 via another branch tube 140.

Two or more branch tubes 140 may be included in one fluid transport pipe 100. Also, a plurality of branch tubes 140 may be included for the first conduit 110 and/or the second conduit 120 in one fluid transport pipe 100. For example, as shown in FIG. 1, a total of four branch tubes 140 may be included in one fluid transport pipe 100. At this time, two branch tubes 140 may be connected to the first conduit 110, and the other two branch tubes 140 may be connected to the second conduit 120.

In addition, the branch tube 140 may be configured to protrude from the first conduit 110 and/or the second conduit 120 in a shape inclined at a predetermined angle. For example, the branch tube 140 may be configured to protrude in an inclined form at an angle of approximately 45 degrees with respect to the extension direction of the first conduit 110 and/or the second conduit 120. In this case, bubbles may be easily discharged from the inside of the branch tube 140 or the conduit, and the cooling medium may move more smoothly.

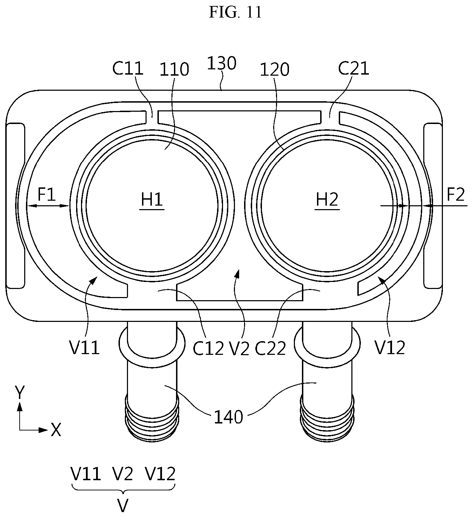

FIG. 11 is a cross-sectional view schematically showing a partial configuration of a fluid transport pipe 100 according to still another embodiment of the present disclosure. For example, FIG. 11 may be regarded as a modified example of the configuration of FIG. 2.

Referring to FIG. 11, the first conduit 110 and the second conduit 120 may have different separation distances from the inner surface of the housing 130. More specifically, in the embodiment of FIG. 11, the horizontal distance (distance in the left and right direction) between the outer surface of the first conduit 110 and the left inner surface of the housing 130 may be expressed as F1, and the horizontal distance (distance in the left and right direction) between the outer surface of the second conduit 120 and the right inner surface of the housing 130 may be expressed as F2. At this time, F1 may be designed to be longer than F2. In this embodiment, it may be regarded that the first conduit 110 is configured to be spaced further away from the inner surface of the housing 130 than the second conduit 120. Also, in this embodiment, the outer hollow V11 around the first conduit 110 may be regarded as being wider than the outer hollow V12 around the second conduit 120.

According to this embodiment, the insulation performance between the first conduit 110 and the second conduit 120 by the hollow may be set differently. In other words, since the hollow V11 at the outer portion of the first conduit 110 is wider than the hollow V12 at the outer portion of the second conduit 120, it may be regarded that the insulation performance of the first conduit 110 is secured better than that of the second conduit 120.

In particular, fluids with different temperatures may flow through the first conduit 110 and the second conduit 120. For example, a low-temperature cooling water before cooling the battery may flow through the first conduit 110, and a high-temperature cooling water after cooling the battery may flow through the second conduit 120. Therefore, there is a high possibility that condensation is formed on the left outer surface of the housing 130 where the first conduit 110 is located. However, according to this embodiment, since the insulation layer on the left side is formed thick, it is possible to more reliably prevent condensation from occurring on the left outer surface of the housing 130. That is, in this embodiment, the condensation prevention performance may be further improved by allowing a low-temperature fluid to flow through the portion where the air layer is formed widely.

The fluid transport pipe 100 according to the present disclosure may include a polymer material. For example, the fluid transport pipe 100 according to the present disclosure may be made of PA (PolyAmide) material. However, the fluid transport pipe 100 according to the present disclosure is not limited to this specific material and may be made of various other materials, such as various other plastic materials.

In addition, the fluid transport pipe 100 according to the present disclosure may further include an insulating material, particularly a foam insulation material. For example, the foam insulation material may be made of NBR (Nitrile Butadien Rubber). This insulating material may be attached to the outer surface of the housing 130 to further improve the condensation prevention performance of the fluid transport pipe 100.

In particular, the housing 130 may have a flat surface on its outer surface. More specifically, as shown in FIGS. 1 and 2, the housing 130 may have flat front and rear surfaces and rounded left and right surfaces. In this case, the foam insulation material may be easily attached to surround the outer surface of the housing 130. Therefore, the process efficiency for attaching the foam insulation material may be improved, and the effect of improving condensation prevention performance by the foam insulation material may be further increased.

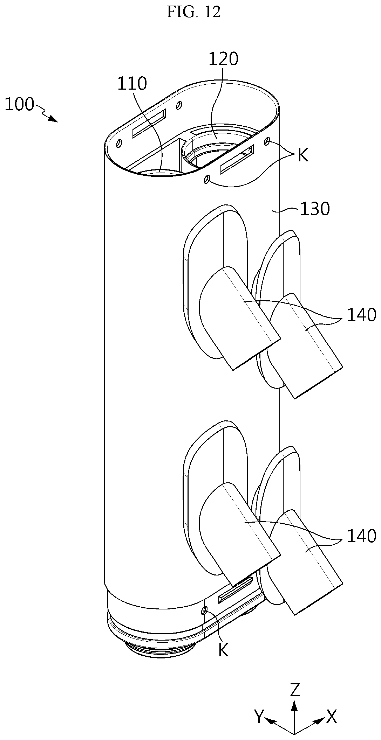

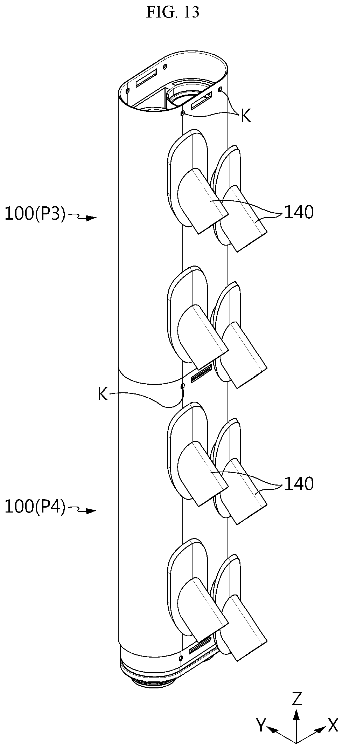

FIG. 12 is a perspective view schematically showing the configuration of a fluid transport pipe 100 according to still another embodiment of the present disclosure. Also, FIG. 13 is a diagram schematically showing the configuration in which the fluid transport pipe 100 of FIG. 12 is coupled. Even in this embodiment, features different from the former embodiments will also be described in detail.

Referring to FIGS. 12 and 13, the fluid transport pipe 100 is formed generally similarly to the fluid transport pipe 100 of FIGS. 1 to 11, but may be formed to have a flatter shape on the whole with almost no protruding portion on the outer surface. In particular, referring to FIG. 12, the fluid transport pipe 100 may be configured to have a flat surface from one end to the other end in the longitudinal direction (Z-axis direction), for example from the top to the bottom, with no protruding parts on the whole, except for the branch tube 140. Moreover, referring to the drawings such as FIGS. 8 and 9, the fluid transport pipes 100 have the cover portion E at the ends that are coupled to each other, and the cover portion E may be configured to protrude in the horizontal direction further to other surfaces. However, in the fluid transport pipe 100 shown in FIG. 12, the coupling portion at the end side is also configured to be flat without protruding in the horizontal direction. Moreover, as shown in FIG. 13, in a state where the two fluid transport pipes 100 P3, P4 are coupled to each other, the coupling portion has no externally protruding portion, and may maintain a flat state with other surfaces except the branch tube 140.

According to this embodiment of the present disclosure, the coupling portion of the housing 130 in the fluid transport pipe 100 is formed flat and smooth, so the process efficiency may be further improved when attaching the foam insulation material or the like. In this case, as the protruding portion is removed or reduced, the insulation effect by the foam insulation material may be further improved by expanding the portion surrounded by the foam insulation material or improving the sealing properties of the foam insulation material. Also, in this case, there is an advantage in appearance, and also interference with other surrounding components may be minimized by reducing the protruding portion at the outer side of the fluid transport pipe 100.

In addition, referring to FIG. 12, the housing 130 may be configured to be bolted to another housing 130. For example, in the housing 130, bolting holes may be formed at corresponding positions at the top and the bottom, as indicated by K. Accordingly, as shown in FIG. 13, when two fluid transport pipes 100 (P3, P4) are coupled in the upper and lower directions, the bolting hole K at the coupling portion may communicate with each other. In addition, fastening members such as bolts are inserted into the bolting holes K so that the two fluid transport pipes 100 (P3, P4) may be connected and fixed to each other. Moreover, the portion where the bolting hole K is formed in the housing 130 may be formed so as not to protrude outward. According to this embodiment, when covering the fluid transport pipe 100 with an insulating material or the like, the process efficiency may be improved by preventing the insulating material or the like from getting caught in the portion where the bolting hole K is formed.

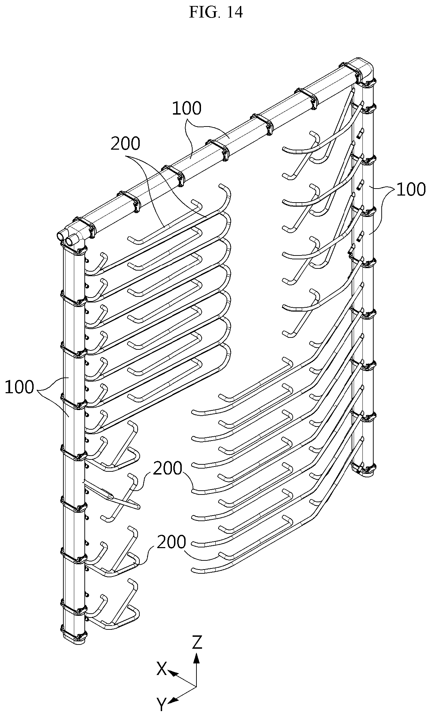

FIG. 14 is a diagram schematically showing a partial configuration of a cooling device according to an embodiment of the present disclosure.

Referring to FIG. 14, the cooling device according to the present disclosure includes the fluid transport pipe 100 according to the present disclosure. In particular, the cooling device according to the present disclosure may include a plurality of fluid transport pipes 100 according to the present disclosure. At this time, the plurality of fluid transport pipes 100 may be coupled in the longitudinal direction.

Moreover, the coupled body of the plurality of fluid transport pipes 100, namely a pipe assembly, may be configured to be bent one or more times. For example, as shown in FIG. 14, the pipe assembly may be configured to be bent twice. At this time, the pipe assembly may include two portions extending in the vertical directions (Z-axis direction) and one portion extending in the horizontal direction (Y-axis direction). In this case, the bent portion of the pipe assembly may have a bent pipe that connects the fluid transport pipes 100 extending in different directions.

Between the plurality of fluid transport pipes 100, between the first conduits 110, and between the second conduits 120, the hollow is extended so that the open ends may be coupled to each other to allow fluid, especially a cooling water, to flow.

In addition, the cooling device according to the present disclosure may further include one or more connection tubes 200, as shown in FIG. 14. The connection tube 200 may be connected directly or indirectly to the fluid transport pipe 100. For example, one end of the connection tube 200 may be directly connected to the branch tube 140 of the fluid transport pipe 100, and the other end may be connected to a cooling object, for example a battery module. In this case, the connection tube 200 may be configured to supply the cooling water supplied from the branch tube 140 of the fluid transport pipe 100 to the battery module, or to transfer the cooling water discharged from the battery module to the branch tube 140 of the fluid transport pipe 100. Alternatively, the connection tube 200 may be configured to allow fluid to flow between different cooling objects. For example, the connection tube 200 may be connected between battery modules and configured to transfer the cooling water supplied to one battery module to another battery module.

In addition, the cooling device according to the present disclosure may further include a cooling fluid supply unit (not shown) configured to supply fluid, particularly the cooling water, to the fluid transport pipe 100 according to the present disclosure. For example, the cooling device according to the present disclosure may further include a chiller as the cooling fluid supply unit.

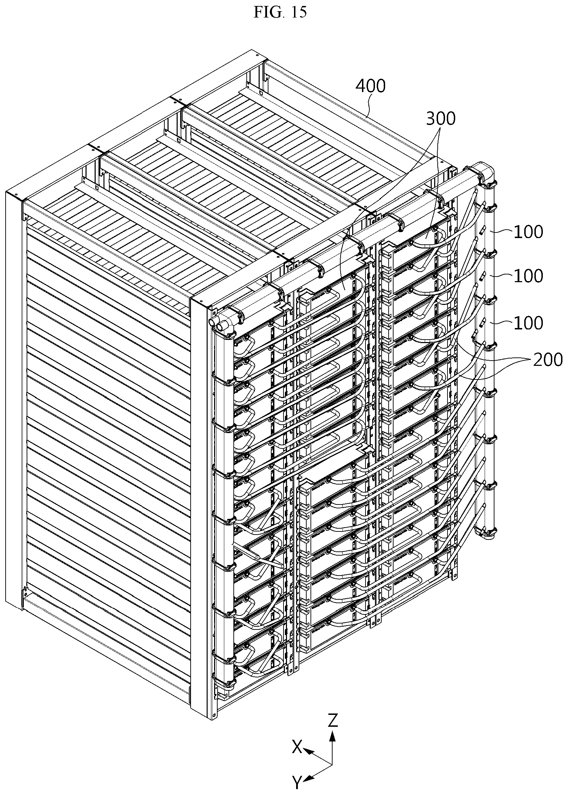

FIG. 15 is a diagram schematically showing the configuration of an energy storage system according to an embodiment of the present disclosure.

Referring to FIG. 15, the energy storage system according to the present disclosure includes the fluid transport pipe 100 according to the present disclosure. Moreover, the energy storage system according to the present disclosure may further include a plurality of fluid transport pipes 100 and the cooling fluid supply unit, as previously described in the cooling device. That is, the energy storage system according to the present disclosure may include the cooling device according to the present disclosure as shown in FIG. 14.

In addition, the energy storage system according to the present disclosure may include one or more battery modules 300. In particular, the energy storage system may include a plurality of battery modules 300, and the plurality of battery modules 300 may be electrically connected to each other in series and/or parallel. At this time, each battery module 300 may include a plurality of battery cells (secondary batteries).

In addition, the energy storage system according to the present disclosure may further include a rack frame 400 for accommodating one or more battery modules 300. For example, the energy storage system according to the present disclosure may include a rack frame 400 so that a plurality of battery modules 300 are accommodated in the upper and lower directions and/or the horizontal directions.

In addition, the energy storage system according to the present disclosure may further include a control unit for controlling or monitoring the charging and discharging operation of the battery module 300, measuring the temperature inside or outside the energy storage system, or controlling the cooling device according to the present disclosure.

Moreover, the energy storage system according to the present disclosure may further include various components of the energy storage system known at the time of filing of this application. For example, the energy storage system according to the present disclosure may further include a container for accommodating components therein as shown in FIG. 15.

Meanwhile, in this specification, terms indicating directions such as "upper", "lower", "left", "right", "front", and "rear" may be used, but these terms are only for convenience of explanation, and it is obvious to those skilled in the art that these terms may vary depending the location of the a object or the location of an observer. In addition, in this specification, the terms "inner" and "outer" may be used, but unless otherwise specified, for each component, the inner direction may refer to a direction toward the center, and the outer direction may refer to a direction opposite thereto.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

### Reference Signs

100: fluid transport pipe
110: first conduit
120: second conduit
130: housing
140: branch tube
200: connection tube
300: battery module
400: rack frame
H1: first flow path, H2: second flow path
V: hollow
P1: first pipe, P2: second pipe

## Claims

1. A fluid transport pipe, comprising:
a first conduit having a shape elongated in one direction and configured to have a first flow path formed therein so that both longitudinal ends of the first flow path are open;
a second conduit having a shape elongated in one direction and configured to have a second flow path formed therein so that both longitudinal ends of the second flow path are open; and
a housing having a hollow and configured to accommodate the first conduit and the second conduit together.

2. The fluid transport pipe according to claim 1,
wherein at least one of the first conduit and the second conduit is configured to be at least partially spaced apart from an inner surface of the housing.

3. The fluid transport pipe according to claim 1,
wherein the first conduit and the second conduit are disposed to be spaced apart from each other by a predetermined distance inside the hollow of the housing.

4. The fluid transport pipe according to claim 1,
wherein the first conduit and the second conduit are mounted parallel to each other inside the hollow of the housing.

5. The fluid transport pipe according to claim 1,
wherein the first conduit and the second conduit are formed in a circular tube shape, respectively.

6. The fluid transport pipe according to claim 5,
wherein the first conduit and the second conduit have an air layer formed along a curved shape of at least a part of an outer surface thereof.

7. The fluid transport pipe according to claim 1,
wherein at least one of the first conduit and the second conduit is coupled and fixed inside the hollow of the housing through two or more connection portions.

8. The fluid transport pipe according to claim 7,
wherein the connection portions are located at both ends of the first conduit or the second conduit in a direction orthogonal to the arrangement direction of the first conduit and the second conduit.

9. The fluid transport pipe according to claim 1,
wherein the first conduit and the second conduit are configured so that both open ends thereof are engaged with each other.

10. The fluid transport pipe according to claim 1,
wherein the housing is configured so that one end and the other end thereof may be coupled to each other.

11. The fluid transport pipe according to claim 10,
wherein the housing includes a cover portion provided on at least at one end thereof and configured to extend further in a coupling direction than the first conduit and the second conduit.

12. The fluid transport pipe according to claim 1, further comprising:
an outer sealing portion provided on an outer surface of an end of the housing.

13. A cooling device, comprising the fluid transport pipe according to any one of claims 1 to 12.

14. An energy storage system, comprising the fluid transport pipe according to any one of claims 1 to 12.
